# FASCICULE DE BREVET EUROPEEN

(11) **EP 0 475 808 B1**
(45) Date de publication et mention de la délivrance du brevet: **21.12.1994**
(21) Numéro de dépôt: 91402283.5
(22) Date de dépôt: 21.08.1991
(51) Int. Cl.: G02B 5/00, G03B 9/10

(54) **Dispositif bistable sans frottement pour usage spatial, notamment pour l'obturation d'un orifice d'entrée d'un instrument optique spatial**
Bistabile, reibungsfreie, weltraumtaugliche Anordnung, insbesondere zur Abdeckung der Eintrittsöffnung eines optischen Instruments im Weltraum
Bistable frictionless device for use in space, especially for the obturation of the entrance aperture of an optical space instrument

(30) Priorité: 22.08.1990 FR 9010551
(43) Date de publication de la demande: 18.03.1992
(73) Titulaire: AEROSPATIALE Société Nationale Industrielle, 75781 Paris Cédex 16 (FR)
(72) Inventeur: Bajat, Thierry, F-06210 Mandelieu (FR); Digoin, Jean-Jacques, F-83600 Les Adrets (FR); Nesa, Jean, F-06210 Mandelieu (FR)
(74) Mandataire: Rinuy, Santarelli

(56) Documents cités:
- WO-A-85/02478
- WO-A-89/09944
- DD-A- 275 332
- DE-A- 2 532 563
- DE-A- 3 901 220

## Description

L'invention concerne le montage et la commande en mouvement d'un élément mobile angulairement par rapport à un support entre deux positions extrêmes.

Elle vise en particulier, mais non exclusivement, le montage et la commande en mouvement d'un obturateur adapté à obturer, ou à dégager, un orifice d'entrée d'un instrument optique spatial (télescope d'observation terrestre ou stellaire par exemple).

Ainsi qu'on le sait, il est certaines phases de la vie d'un système optique spatial pendant lesquelles l'entrée de celui-ci doit être obturée. C'est non seulement le cas du lancement du véhicule spatial auquel ce système optique spatial est intégré (jusqu'à la mise de ce véhicule spatial en configuration de service), mais aussi ultérieurement au cours de la vie normale en service de ce système optique, notamment lorsque du fait de l'attitude du véhicule spatial le système optique vient à être soumis à des agressions ultérieures (risques d'éblouissement par le soleil, risques de collisions avec des particules étrangères ...).

L'obturation et le dégagement de l'entrée d'un tel système optique spatial suppose la manoeuvre d'un volet ou panneau obturateur entre une configuration ouverte dans laquelle l'entrée du système est dégagée et une configuration d'obturation dans laquelle aucun faisceau, de lumière ou de particules, ne peut pénétrer dans le système optique.

Il faut préciser ici que le volet obturateur considéré ici a une fonction (protection temporaire) tout à fait différente de celle de l'obturateur d'un appareil photo qui doit être manoeuvré à grande vitesse en sorte de ne rester ouvert que pendant un temps de pose très court.

Il faut préciser aussi que le fait que le volet obturateur soit manoeuvré à proximité d'un système optique exclut l'utilisation de lubrifiants, non seulement en raison du vide spatial environnant, mais aussi à cause des risques de pollution par ces lubrifiants des éventuelles surfaces froides du système optique (cas par exemple d'observations par infra-rouges qui suppose un refroidissement du système optique lui-même).

Compte tenu de ce que la vocation du dispositif de montage et de commande en mouvement (aussi appelé "mécanisme" dans la suite) est d'être embarqué sur un véhicule spatial, aucune intervention humaine n'est possible en cas de défaillance. Or il peut apparaître nécessaire, à n'importe quel moment de la durée de vie du véhicule spatial, de faire passer l'obturateur de l'une à l'autre de ses positions sous peine de compromettre irrémédiablement la suite de la mission, avec les conséquences économiques que l'on peut imaginer. On recherche donc pour un tel dispositif un degré de fiabilité de plus en plus élevé, d'autant que l'on tend à augmenter de plus en plus la durée de vie des véhicules spatiaux (notamment satellites) : on vise souvent des durées de l'ordre de 10 ans.

Des tentatives ont déjà été effectuées pour atteindre une fiabilité importante, mais en proposant en pratique de mettre en oeuvre des moteurs électriques, avec des roulements de paliers à billes. Cela peut conduire à des collages des pièces en contact en raison du vide spatial, d'où des risques de pannes.

L'invention a pour objet de supprimer ces risques de pannes, de manière à atteindre un niveau de fiabilité inconnu jusqu'à présent, en proposant pour un tel dispositif de montage et de commande en mouvement une structure simple (garantissant que la fiabilité subsiste dans le temps), sans pièces en frottement relatif (éliminant les risques de pannes mécaniques, par collage sous vide notamment), sans consommation d'énergie pour le maintien de l'équipement en ses positions extrêmes (recherche d'une bistabilité qui limite les besoins en énergie aux seules manoeuvres entre ces positions), tout en accordant la priorité à l'une de ses positions (pour réduire les conséquences d'un éventuel incident en cours de manoeuvre), et en respectant l'exigence, classique dans les applications spatiales, d'une faible masse.

L'invention propose à cet effet un dispositif de montage et de commande en mouvement d'un élément mobile par rapport à un support entre deux positions extrêmes, caractérisé en ce qu'il comporte un bras portant l'élément mobile et qui est monté pivotant autour d'un axe de rotation, une tige élastique en torsion alignée selon cet axe et qui est fixée, en des zones décalées axialement, respectivement au bras et au support, deux butées mécaniques portées par le support et déterminant pour le bras deux configurations angulaires extrêmes dans lesquelles l'élément est dans ses positions extrêmes, la tige élastique en tension tendant à ramener le bras dans l'une prédéterminée de ces configurations, deux paires d'organes complémentaires de verrouillage magnétique portés respectivement par le support et par le bras, les organes complémentaires de l'une ou l'autre des paires étant adaptés à être en regard lorsque le bras est dans l'une ou l'autre des configurations extrêmes, et des moyens de lancement portés par le support adaptés à donner une impulsion de lancement au bras depuis chacune vers l'autre des configurations extrêmes.

Selon des dispositions préférées, éventuellement combinées :
- les deux paires d'organes complémentaires de verrouillage magnétique comportent deux pièces fixes disposées de part et d'autre du volume balayé par le bras autour de l'axe de rotation et au moins une pièce portée par le bras en sorte de venir en regard de l'une ou l'autre des pièces fixes et adaptée à s'y maintenir par attraction magnétique, un enroulement étant prévu autour de chaque pièce fixe, avec un axe d'enroulement perpendiculaire au bras lorsque celui-ci est à proximité de cette pièce fixe,
- les pièces fixes sont en matériau magnétique, formant conjointement avec leur enroulement un électro-aimant, et la pièce mobile est un aimant d'aimantation transversale au bras et perpendiculaire à la tige de torsion,
- les pièces fixes sont des aimants à aimantation transversale au bras lorsque celui-ci est à proximité, et la pièce mobile est en matériau magnétique,
- les éléments de lancement sont inclus dans les organes complémentaires de verrouillage magnétique,
- les moyens de lancement comportent des enroulements enroulés autour des organes de verrouillage portés par le support, chaque enroulement ayant un axe d'enroulement perpendiculaire au bras lorsque celui-ci est à proximité,
- les moyens de lancement comportent un levier monté sur un pivot flexible en torsion parallèlement à la tige de torsion, comportant un doigt de poussée adapté à appliquer une impulsion de lancement au bras, et un tronçon engagé dans une bobine portée par le support,
- la tige comporte une portion médiane à laquelle est fixé le bras et des portions extrêmes solidaires du support,
- l'élément mobile est un obturateur adapté à obturer, ou dégager, respectivement un orifice ménagé dans le support,
- la tige élastique en torsion est perpendiculaire au plan de l'orifice.

Des objets, caractéristiques et avantages de l'invention ressortent de la description qui suit, donnée à titre d'exemple non limitatif, en regard des dessins annexés sur lesquels :
- la figure 1 est un schéma de principe d'un dispositif selon l'invention destiné à l'obturation d'un orifice selon une première variante,
- la figure 2 est un schéma analogue, selon une seconde variante,
- la figure 3 est une vue en plan, selon la ligne A-A de la figure 5, d'un dispositif selon l'invention conforme au schéma de la figure 1, en configuration d'obturation de l'orifice,
- la figure 4 est une vue en plan de ce même dispositif en configuration de dégagement de l'orifice, et
- la figure 5 est une vue latérale de ce dispositif selon la ligne B-B de la figure 3.

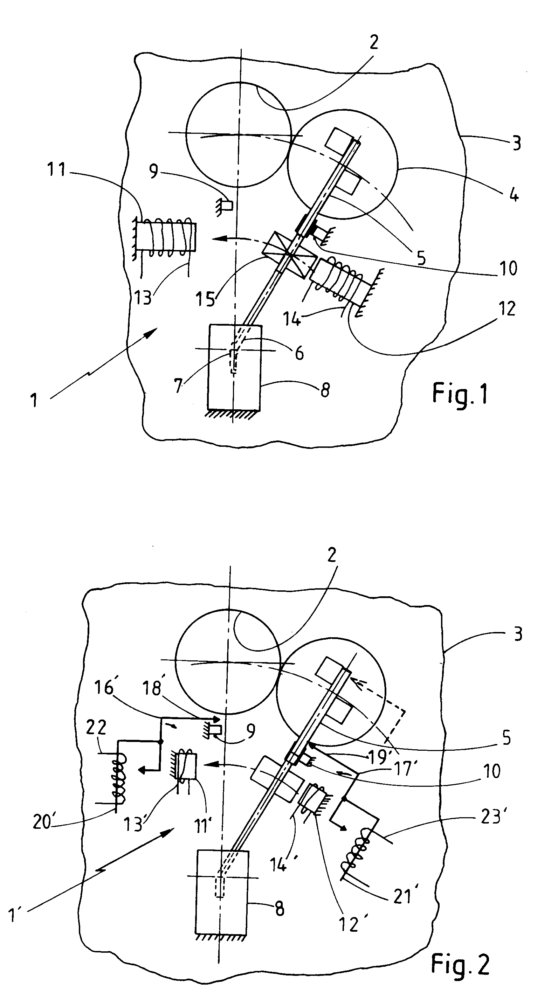

Les figures 1 et 2 proposent schématiquement deux dispositifs de montage et de commande en mouvement, repérés 1 et 1′, destinés à obturer ou dégager un orifice 2 ménagé dans une plaque 3 fixe, grâce à un élément obturateur 4, ici en forme de disque, mobile parallèlement à la plaque fixe 3 entre une configuration d'obturation (non représentée) et une configuration de dégagement.

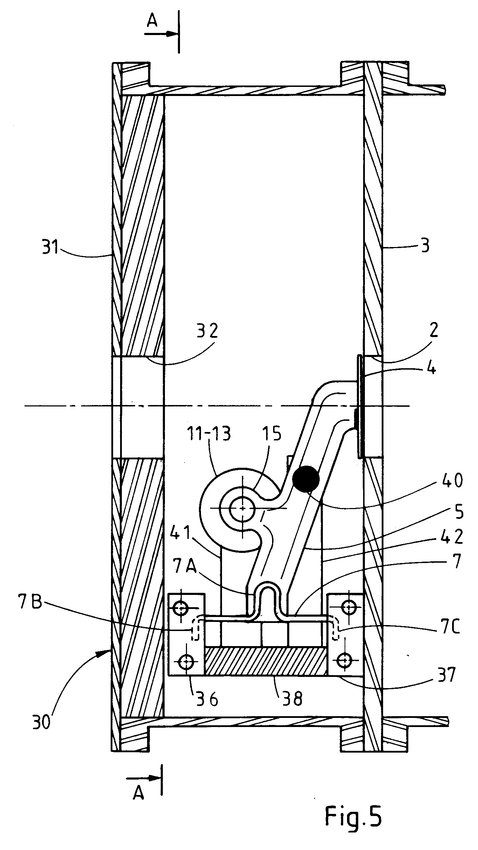

Le disque 4 est solidaire d'un bras 5 dont une zone 6, ici une extrémité, est reliée à une tige 7 flexible en torsion perpendiculaire à la plaque 3 (donc au plan des figures 1 et 2), formant axe de pivotement. Cette tige est, à distance de sa zone de fixation au bras, ancrée dans une portion de support. De préférence, ainsi que cela ressort de la figure 5, cette tige est fixée en sa zone médiane au bras tandis que ses extrémités sont ancrées respectivement dans la plaque 3 et dans une plaque de support 8 qui en est solidaire (en lui étant ici parallèle).

Deux butées mécaniques 9 et 10, également solidaires de la plaque, sont prévues pour délimiter le débattement en pivotement du bras : lorsque le bras est en contact avec la butée 9, le disque est en configuration d'obturation, et lorsque le bras est en contact avec la butée 10, le disque est en configuration dégagée.

La tige 7 est montée en précontrainte en sorte de tendre à amener le bras contre l'une prédéterminée des butées (dite butée prioritaire), choisie en fonction de celle des configurations dans laquelle on souhaite que le disque vienne spontanément (en cas de priorité à l'ouverture, on choisit la butée 10).

La plaque 3 porte en outre, de part et d'autre du volume balayé en pivotement par le bras, deux pièces fixes en regard de l'une ou l'autre desquelles peut venir une pièce mobile, portée par le bras, (éventuellement dédoublée de part et d'autre du bras) et s'y maintenir par attraction magnétique (même dans la configuration que la tige de torsion 7 tend à faire quitter au bras). Autour de ces pièces fixes sont montés des enroulements d'axes perpendiculaires au bras lorsque celui-ci vient à proximité de la pièce fixe considérée.

Le bras peut rester ainsi, de façon stable, dans chacune de ses configurations.

Ces enroulements sont destinés, lorsqu'ils sont alimentés, à annuler, voire inverser, l'interaction magnétique entre ces pièces fixes et la pièce mobile portée par le bras, en sorte de libérer, voire repousser, le bras vers son autre configuration.

A la figure 1, les pièces fixes 11 et 12 constituent, avec leurs enroulements 13 et 14, des électroaimants, tandis que la pièce mobile 15, solidaire du bras, est un aimant d'aimantation transversale au bras (pour des raisons de lisibilité du dessin, on n'a pas représenté les culasses, classiques en soi, qui permettent de refermer les lignes de champ).

En chaque configuration, stable, du bras, celui-ci est en appui sur les butées mécaniques 9 ou 10, "verrouillé" sur celle-ci par l'attraction de l'aimant en regard de la pièce 11 ou 12 formant noyau de fer doux pour l'enroulement qui l'entoure. L'aimant est dimensionné pour que la force d'attraction vers le noyau de fer doux soit supérieure à la force de rappel de la tige 7, en tenant compte en outre d'une marge de sécurité définie en fonction de l'amplitude maximale des efforts parasites auxquels on veut que le "verrouillage magnétique" puisse résister, notamment du fait des vibrations au lancement du satellite ou véhicule spatial dont la plaque 3 fait partie.

Pour faire passer le disque depuis l'une des configurations vers l'autre, on injecte un courant I dans l'enroulement 13 ou 14 auprès duquel est le bras en sorte de créer un champ magnétique de sens opposé à celui de l'aimant 15 (création de pôles en regard ayant le même signe), et d'amplitude supérieure à celle du champ magnétique de l'aimant. Il se crée ainsi une force de répulsion sur l'aimant, donc sur le bras. L'électroaimant est dimensionné en sorte de créer une poussée (accélération) suffisante pour vaincre l'attraction de l'aimant (à laquelle s'ajoute ou se retranche la force de rappel de la tige 7) et en plus injecter au bras (et au disque) une énergie cinétique suffisante pour lui faire approcher suffisamment l'autre configuration pour être attiré magnétiquement vers l'autre noyau de fer doux.

Dans un même temps (ou éventuellement après) on injecte avantageusement un courant I′ dans l'autre bobine visant à augmenter temporairement l'attraction magnétique, de manière à éviter un rebond du bras contre la butée vers laquelle il est envoyé.

En fait, selon le sens de mouvement, la poussée minimale qui doit être appliquée au bras n'est pas la même compte tenu de l'énergie élastique stockée dans la barre de torsion. Toutefois, pour des raisons de simplicité de câblage, on prévoit d'appliquer des courants I identiques dans les deux sens, d'une valeur donc choisie pour pouvoir surmonter l'effet de la tige de torsion 7.

On appréciera qu'en cas de poussée insuffisante suite à un incident temporaire, le bras revient dans sa configuration prioritaire ; il ne reste donc jamais à mi-chemin entre ses configurations. La manoeuvre peut alors être recommencée dès la fin de l'incident temporaire.

La figure 2 propose une variante dans laquelle les pièces fixes 11′ et 12′ sont des aimants d'aimantation perpendiculaire à la position du bras, dans la configuration considérée, tandis que la pièce mobile 15′ est une pièce magnétique. Le principe de mise en oeuvre, par alimentation des enroulements 13′ et 14′, est analogue à celui de la figure 1.

Le dispositif 1′ de la figure 2 diffère en outre de celui de la figure 1 par le fait que des éléments additionnels sont prévus pour donner au bras l'impulsion nécessaire aux changements de configuration.

Les éléments additionnels sont adaptés à appliquer au bras une poussée mécanique.

Ces éléments additionnels comportent, à proximité de chacune des configurations extrêmes du bras, un levier coudé 16′ ou 17′ monté sur un pivot flexible en torsion parallèlement à la tige de torsion 7 (éventuellement de même nature que celle-ci) et comportant un doigt de poussée 18′ ou 19′ adapté à lancer (sans l'accompagner) le bras vers son autre configuration. Le levier coudé comporte en outre une zone 20′ ou 21′, commandée en mouvement par effet électromagnétique. Ces zones 20′ et 21′ sont ici des tronçons en fer doux traversant des bobines 22′ ou 23′.

L'énergie nécessaire pour faire passer d'une configuration stable à l'autre est ici fournie par le doigt de poussée, les enroulements 13′ et 14′ alimentés en synchronisme, servant à neutraliser temporairement les champs magnétiques des aimants 11 et 12 pour libérer le bras ou au contraire accroître ces champs pour assurer une fin de parcours correcte du bras.

L'un ou l'autre des deux modes d'actionnement sera choisi en fonction de certains critères tels que :
- inertie de la masse en mouvement,
- amplitude du mouvement angulaire,
- masse et volume disponible,
- contrainte de verrouillage (en position stable d'ouverture ou fermeture). Ceci est important car de cette contrainte de verrouillage dépendront les niveaux de vibrations acceptables par le mécanisme (les niveaux de vibrations dépendent entre autres du type de lanceur, de la masse embarquée, de la localisation du mécanisme...).

Si l'énergie nécessaire au mouvement (donc la force) est trop importante, un système à poussée linéaire (figure 2) est plus adéquat qu'une poussée électromagnétique (figure 1) ; un tel "percuteur" linéaire nécessite moins d'ampères/tour mais est un peu plus complexe sur le plan mécanique.

Le principe énoncé à propos des figures 1 et 2 est une rotation (d'amplitude limitée, de l'ordre de 25-35°) du bras autour d'un axe perpendiculaire au plan de l'orifice considéré.

Il se généralise, sans difficuté de compréhension pour l'homme de métier, au cas où l'axe de rotation est parallèle à ce plan, l'amplitude de rotation devant en principe être plus importante.

En fait, le principe de l'invention s'applique sans difficulté à des amplitudes pouvant aller jusqu'à 80-90°.

On choisira l'une ou l'autre des orientations de l'axe de rotation en fonction des contraintes d'implantation.

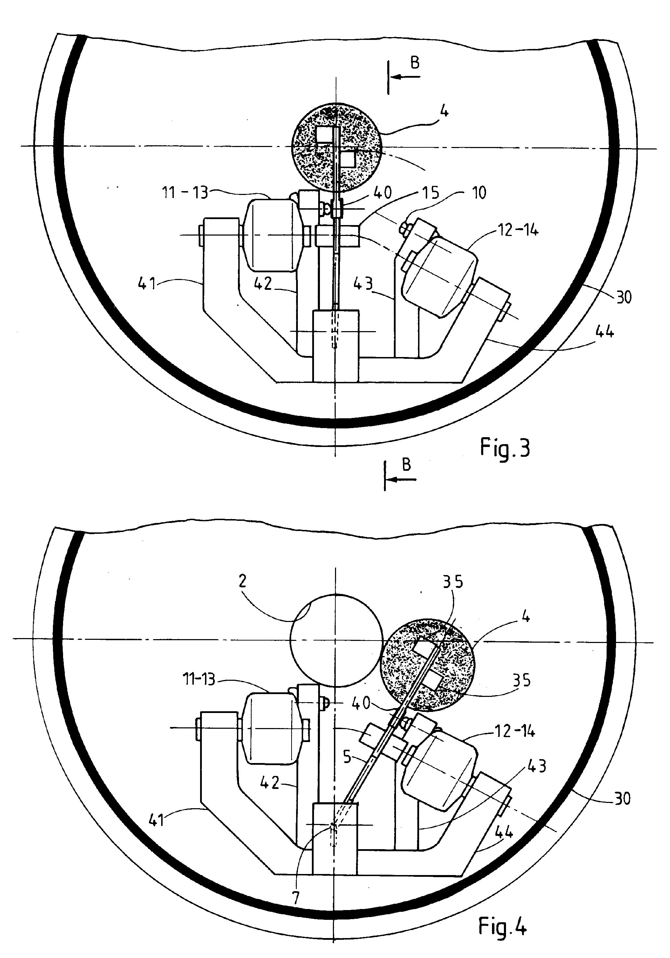

Les figures 3 à 5 présentent un exemple de réalisation du dispositif de la figure 1.

Ce dispositif est placé dans un boîtier cylindrique 30 fermé d'une part par la plaque 3, d'autre part par une plaque 31, toutes deux munies d'orifices 2 et 32 coaxiaux.

Le disque 4 de diamètre légèrement supérieur à celui du faisceau optique déterminé par l'orifice 2, est placé au plus près de cette plaque 3 en sorte d'éviter des phénomènes de diffraction.

Le bras 5 a une géométrie propre à la rigidifier et présente des pattes 35 de fixation à l'arrière du disque.

La tige de torsion 7 est constituée par "une épingle" dont la portion centrale 7A est liée au bras 5, tandis que ses extrémités coudées 7B et 7C sont pressées entre des paires 36 et 37 de blocs de serrage reliées par une entretoise 38, l'une de ces pièces fermant la pièce de support 8 de la figure 1.

Le débattement angulaire du bras est de 29°.

Les butées mécaniques 9 et 10 sont à portées d'appui sphériques et viennent en contact avec des pastilles 40 portées par le bras, traitées de toute façon connue appropriée pour éviter tout collage sous vide.

Ces butées et les électroaimants (11+13) et (12+14) sont maintenus en position par des poutres coudées 41 à 44 solidaires de l'entretoise 38, grâce à quoi l'ensemble du dispositif est un tout facile à manier.

De préférence, les butées sont réglables par rapport à ces poutres (grâce à un montage micrométrique connu), ce qui permet un ajustement précis des positions extrêmes du bras et du disque et des entrefers entre pièces 11 ou 12, et 15.

De façon avantageuse, "l'épingle" 7 est fixée avec une précontrainte qui reste positive même dans la configuration prioritaire, participant au "verrouillage" du bras de cette configuration.

Les bobinages 13 et 14 sont avantageusement doublés pour des raisons de redondance.

On appréciera qu'un équilibrage dynamique du bras et du disque (formant "un équipage mobile") par rapport à la tige 7 permet d'optimiser l'effet de verrouillage lors de contraintes vibratoires importantes. La mise en oeuvre d'organes électromagnétiques offre toutes facilités de calibration de l'énergie transmise à l'équipage mobile (valeurs de courants, ampères/tours des bobines, ...).

Tous les éléments électromagnétiques sont en redondance froide, garantissant une fiabilité électrique maximale, tandis que la structure mécanique garantit une haute fiabilité sans qu'aucune redondance soit nécessaire.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Dispositif de montage et de commande en mouvement d'un élément (4) mobile par rapport à un support (3) entre deux positions extrêmes, caractérisé en ce qu'il comporte un bras (5) portant l'élément mobile et qui est monté pivotant autour d'un axe de rotation, une tige élastique en torsion (7) alignée selon cet axe et qui est fixée, en des zones décalées axialement, respectivement au bras et au support, deux butées mécaniques (9, 10) portées par le support et déterminant pour le bras deux configurations angulaires extrêmes dans lesquelles l'élément est dans ses positions extrêmes, la tige élastique en torsion tendant à ramener le bras dans l'une prédéterminée de ces configurations, deux paires d'organes complémentaires de verrouillage magnétique (11, 13, 15 ; 12, 14, 15 ; 11′, 13′, 15′ ; 12′, 14′, 15′) portés respectivement par le support et par le bras, les organes complémentaires de l'une ou l'autre des paires étant adaptés à être en regard lorsque le bras est dans l'une ou l'autre des configurations extrêmes, et des moyens de lancement (11-15 ; 16′-23′) portés par le support adaptés à donner une impulsion de lancement au bras depuis chacune vers l'autre des configurations extrêmes.

2. Dispositif selon la revendication 1, caractérisé en ce que les deux paires d'organes complémentaires de verrouillage magnétique comportent deux pièces fixes (11, 11′, 12, 12′) disposées de part et d'autre du volume balayé par le bras autour de l'axe de rotation et au moins une pièce portée par le bras en sorte de venir en regard de l'une ou l'autre des pièces fixes et adaptée à s'y maintenir par attraction magnétique, un enroulement (13, 14, 13′, 14′) étant prévu autour de chaque pièce fixe, avec un axe d'enroulement perpendiculaire au bras lorsque celui-ci est à proximité de cette pièce fixe.

3. Dispositif selon la revendication 2, caractérisé en ce que les pièces fixes (11, 13) sont en matériau magnétique, formant conjointement avec leur enroulement (12, 14) un électro-aimant, et la pièce mobile (15) est un aimant d'aimantation transversale au bras et perpendiculaire à la tige de torsion.

4. Dispositif selon la revendication 2, caractérisé en ce que les pièces fixes sont des aimants (11′, 13′) à aimantation transversale au bras lorsque celui-ci est à proximité, et la pièce mobile est en matériau magnétique.

5. Dispositif selon l'une quelconque des revendications 1 à 4, caractérisé en ce que les éléments de lancement sont inclus dans les organes complémentaires de verrouillage magnétique.

6. Dispositif selon l'une quelconque des revendications 1 à 4, caractérisé en ce que les moyens de lancement comportent des enroulements (13, 14, 13′, 14′), enroulés autour des organes de verrouillage portés par le support, chaque enroulement ayant un axe d'enroulement perpendiculaire au bras lorsque celui-ci est à proximité.

7. Dispositif selon l'une quelconque des revendications 1 à 5, caractérisé en ce que les moyens de lancement comportent un levier (16′, 17′) monté sur un pivot flexible en torsion parallèlement à la tige de torsion (7), comportant un doigt de poussée adapté à appliquer une impulsion de lancement au bras, et un tronçon (20′, 21′) engagé dans une bobine (22′, 23′) portée par le support.

8. Dispositif selon l'une quelconque des revendications 1 à 7, caractérisé en ce que la tige (7) comporte une portion médiane (7A) à laquelle est fixé le bras et des portions extrêmes (7B, 7C) solidaires du support.

9. Dispositif selon l'une quelconque des revendications 1 à 8, caractérisé en ce que l'élément mobile (4) est un obturateur adapté à obturer, ou dégager, respectivement un orifice (2) ménagé dans le support.

10. Dispositif selon la revendication 9, caractérisé en ce que la tige élastique en torsion est perpendiculaire au plan de l'orifice.

## Patentansprüche

1. Vorrichtung zur Montage und Bewegungssteuerung eines Elements (4), das bezüglich eines Trägers (3) zwischen zwei Endstellungen beweglich ist, dadurch gekennzeichnet, daß sie einen Arm (5), der das bewegliche Element trägt und um eine Drehachse schwenkbar montiert ist, eine torsionselastische Stange (7), die in dieser Achse gerichtet ist und in axial versetzten Zonen am Arm bzw. am Träger befestigt ist, zwei mechanische Anschläge (9, 10), die von dem Träger getragen sind und für den Arm zwei winkelmäßige Endkonfigurationen bestimmen, in denen das Element in seinen Endstellungen ist, wobei die torsionselastische Stange bestrebt ist, den Arm in eine vorbestimmte dieser Konfigurationen zurückzubringen, zwei Paare von komplementären Organen zur magnetischen Verriegelung (11, 13, 15; 12, 14, 15; 11′, 13′, 15′; 12′, 14′, 15′), die von dem Träger bzw. dem Arm getragen sind, wobei die komplementären Organe des einen oder des anderen der Paare dafür ausgelegt sind, einander gegenüberzustehen, wenn der Arm in der einen oder der anderen der Endkonfigurationen ist, und von dem Träger getragene Abstoßmittel (11-15; 16′-23′) besitzt, die dafür ausgelegt sind, dem Arm von jeder der Endkonfigurationen aus auf die andere zu einen Abstoßimpuls zu verleihen.

2. Vorrichtung nach Anspruch 1, dadurch gekennzeichnet, daß die beiden Paare von komplementären Organen zur magnetischen Verriegelung zwei feststehende Teile (11, 11′, 12, 12′), die zu beiden Seiten des von dem Arm um die Drehachse herum bestrichenen Volumens angeordnet sind, und mindestens ein Teil umfassen, das von dem Arm so getragen ist, daß es vor das eine oder das andere der feststehenden Teile kommt, und dafür ausgelegt ist, sich an diesem durch magnetische Anziehung zu halten, wobei um jedes feststehende Teil herum eine Wicklung (13, 14, 13′, 14′) vorgesehen ist, deren Wicklungsachse zum Arm senkrecht ist, wenn dieser in Nähe dieses feststehenden Teils ist.

3. Vorrichtung nach Anspruch 2, dadurch gekennzeichnet, daß die feststehenden Teile (11, 13) aus einem magnetischen Werkstoff bestehen, der zusammen mit ihrer Wicklung (12, 14) einen Elektromagnet bildet, und das bewegliche Teil (15) ein Magnet mit quer zum Arm und senkrecht zur Torsionsstange gerichteter Magnetisierung ist.

4. Vorrichtung nach Anspruch 2, dadurch gekennzeichnet, daß die feststehenden Teile Magnete (11′, 13′) mit zum Arm quer gerichteter Magnetisierung sind, wenn dieser in der Nähe ist, und das bewegliche Teil aus magnetischem Werkstoff besteht.

5. Vorrichtung nach einem der Ansprüche 1 bis 4, dadurch gekennzeichnet, daß die Abstoßelemente in die komplementären Organe zur magnetischen Verriegelung eingeschlossen sind.

6. Vorrichtung nach einem der Ansprüche 1 bis 4, dadurch gekennzeichnet, daß die Abstoßmittel Wicklungen (13, 14, 13′, 14′) besitzen, die um die von dem Träger getragenen Verriegelungsorgane gewickelt sind, wobei jede Wicklung eine Wicklungsachse hat, die zum Arm senkrecht ist, wenn dieser in der Nähe ist.

7. Vorrichtung nach einem der Ansprüche 1 bis 5, dadurch gekennzeichnet, daß die Abstoßmittel einen Hebel (16′, 17′), der auf einer parallel zur Torsionsstange (7) torsionsflexiblen Drehachse montiert ist und einen Schubdaumen besitzt, der dafür ausgelegt ist, an den Arm einen Abstoßimpuls anzulegen, und einen Abschnitt (20′, 21′) umfassen, der in eine von dem Träger getragene Spule (22′, 23′) eingeführt ist.

8. Vorrichtung nach einem der Ansprüche 1 bis 7, dadurch gekennzeichnet, daß die Stange (7) einen mittleren Teil (7A), an dem der Arm befestigt ist, und mit dem Träger fest verbundene Endteile (7B, 7C) besitzt.

9. Vorrichtung nach einem der Ansprüche 1 bis 8, dadurch gekennzeichnet, das das bewegliche Element (4) ein Verschlußorgan ist, das dafür ausgelegt ist, eine in dem Träger ausgesparte Öffnung (2) zu verschließen bzw. freizulegen.

10. Vorrichtung nach Anspruch 9. dadurch gekennzeichnet, daß die torsionselastische Stange zur Ebene der Öffnung senkrecht ist.

## Claims

1. Device for the assembly and movement control of an element (4) that can move with respect to a support (3) between two extreme positions, characterised in that it comprises an arm (5) supporting the mobile element, said arm pivoting around a rotation axis, an elastic torsion rod (7) aligned along this axis, secured respectively to the arm and to the support at axially offset points, two mechanical stops (9, 10) mounted on the support and determining for the arm two extreme angular configurations in which the element is in its extreme positions, the elastic torsion rod tending to bring the arm into a predetermined one of these configurations, two pairs of complementary magnetic latching elements (11, 13, 15; 12, 14, 15; 11′, 13′, 15′; 12′ 14′, 15′) mounted respectively on the support and on the arm, the complementary units of either pair being adapted to be opposite when the arm is in one or other of the extreme configurations, and launching means (11-15; 16′-23′) mounted on the support designed to give a launching impetus to the arm from each to the other of the extreme configurations.

2. Device according to claim 1, characterised in that the two pairs of complementary magnetic latching elements comprise two fixed parts (11, 11′, 12, 12′) disposed either side of the volume swept by the arm around the rotation axis and at least one part mounted on the arm so as to be opposite either of the fixed parts and adapted to be held there by magnetic attraction, a winding (13, 14, 13′, 14′) being provided around each fixed part with a winding axis perpendicular to the arm when the latter is in the vicinity of this fixed part.

3. Device according to claim 2, characterised in that the fixed parts (11, 13) are made of magnetic material, forming jointly with their winding (12, 14) an electromagnet, and the mobile part (15) is a magnet magnetised in a direction transverse to the arm and perpendicular to the torsion rod.

4. Device according to claim 2, characterised in that the fixed parts are magnets (11′, 13′) magnetised in a direction transverse to the arm when the latter is nearby, and the mobile part is made of magnetic material.

5. Device according to any one of claims 1 through 4, characterised in that the launching means are included in the complementary magnetic latching elements.

6. Device according to any one of claims 1 through 4, characterised in that the launching means comprise windings (13, 14, 13′, 14′) wound around the latching elements mounted on the support, each winding having a winding axis perpendicular to the arm when the latter is nearby.

7. Device according to any one of claims 1 through 4, characterised in that the launching means comprise a lever (16′, 17′) mounted on a flexible torsion pivot parallel to the torsion rod (7) comprising a thrust pin designed to apply a launching impetus to the arm and a section (20′, 21′) engaged in a coil (22′, 23′) mounted on the support.

8. Device according to any one of claims 1 through 7, characterised in that the rod (7) comprises a median portion (7A) to which the arm is secured and end portions (7B, 7C) integral with the support.

9. Device according to any one of claims 1 through 8, characterised in that the mobile element (4) is a shutter designed to close or open respectively an aperture (2) in the support.

10. Device according to claim 9, characterised in that the elastic torsion rod is perpendicular to the plane of the aperture.
